# FASCICULE DE BREVET EUROPEEN

(11) **EP 3 411 442 B1**
(45) Date de publication et mention de la délivrance du brevet: **07.09.2022**
(21) Numéro de dépôt: 16706892.3
(22) Date de dépôt: 02.02.2016
(51) Int. Cl.: C09D 5/16

(54) **PROCÉDÉ DE PRÉVENTION DU DÉPÔT DE BIOSALISSURES SUR UN MATÉRIAU EN CONTACT AVEC UN MILIEU AQUEUX**
VERFAHREN ZUR VERHINDERUNG VON BIOFOULING AUF EINEM WERKSTOFF IN KONTAKT MIT EINEM WÄSSRIGEN MITTEL
PROCESS FOR PREVENTING THE FORMATION OF BIOFOULING ON MATERIAL IN CONTACT WITH AN AQUEOUS MEDIUM

(43) Date de publication de la demande: 12.12.2018
(73) Titulaire: Engie, 92400 Courbevoie (FR)
(72) Inventeur: GALLARDO, Marianne, 95880 Enghien-les-Bains (FR); MAUREL, Stéphane, 75014 Paris (FR); PALE, Maïlys, 95880 Enghien-Les-Bains (FR); COURTOIS, Anthony, 29200 Brest (FR); THOLLAS, Bertrand, 29200 Brest (FR)
(74) Mandataire: Lavoix
(86) Numéro de dépôt international: PCT/FR2016/050219
(87) Numéro de publication internationale: WO 2017/134352

(56) Documents cités:
- WO-A1-2012/001164
- JP-A- H03 239 766
- US-A1- 2004 258 655

## Description

La présente invention concerne la prévention du dépôt de biosalissures sur une surface immergée ou en contact avec un milieu aqueux.

Quand un matériau est placé en conditions humides ou immergé dans un milieu aqueux, on observe le dépôt de biosalissures sur sa surface. L'adhésion des biosalissures se fait en plusieurs étapes. Tout d'abord, un film primaire, dit « biofilm », composé des matières organiques présentes dans le milieu, se forme sur la surface. Ce film permet ensuite l'adhésion de microorganismes (bactéries, algues microscopiques), dit « microfouling » en anglais, puis des macroorganismes (à titre illustratif, des algues macroscopiques, des balanes, des moules...), dit « macrofouling » en anglais.

La présence de ces biosalissures peut être gênante, non seulement pour l'esthétique de la surface, mais aussi car elle peut entraver l'utilisation du matériau utilisé, par exemple en entravant l'écoulement du fluide aqueux, en diminuant les échanges thermiques, en diminuant les propriétés optiques ou mécaniques du matériau, en accélérant la corrosion ou la biodégradation du matériau. Par exemple, un terminal méthanier ou une centrale thermique comprennent de nombreuses canalisations dans lesquelles circule de l'eau, qui permettent notamment soit le réchauffement soit le refroidissement de l'installation. Le dépôt de biosalissures à l'intérieur de ces canalisations est susceptible de freiner ou d'empêcher la circulation de l'eau et/ou de diminuer l'échange thermique entre l'eau circulant et l'installation à réchauffer ou refroidir, et donc de nuire à la performance de l'installation.

L'élimination du dépôt de biosalissures et la prévention de ce dépôt est usuellement réalisée par la protection cathodique, l'utilisation d'ultrasons, l'utilisation d'agents biocides, notamment par chloration. Les agents biocides ont toutefois un impact négatif sur l'environnement des matériaux traités. De nouvelles normes et directives relatives à l'utilisation d'agents biocides devraient prochainement entrer en vigueur. Des méthodes alternatives peu ou non biocides sont donc recherchées.

La littérature rapporte l'utilisation de certains exopolysaccharides (ci-après EPS) susceptibles de former un film sur des surfaces de matériaux en milieu marin pour prévenir l'adhésion de ces biosalissures.

La demande WO 2012/001164 décrit l'utilisation d'EPS, de préférence ceux obtenus par fermentation de bactéries issues d'écosystèmes hydrothermaux profonds, notamment du genre *Alteromonas* ou *Pseudoalteromonas* pour prévenir la formation du biofilm microscopique.

G. Raguenes et al. (Applied and Environmental Microbiology 62(1), 67-73, 1996) suggèrent l'utilisation d'un EPS produit par fermentation de bactéries marines des souches ST 716, HYD 1545 et HYD 1644 issues d'écosystèmes hydrothermaux profonds et du genre *Alteromonas macleodii* pour la biodétoxification et lors du traitement des eaux usées.

Cela étant, le prélèvement de bactéries issues d'écosystèmes hydrothermaux profonds et le procédé de fermentation permettant de produire les EPS sont complexes et donc coûteux. L'utilisation de bactéries issues de milieux non atypiques serait plus simple et plus économique.

La demande EP 1 170 359 et Hayase et al. (Journal of Bioscience and Bioengineering, 95(1), 72-76, 2003) décrivent que l'application d'une biogelée comprenant des polysaccharides produit par une bactérie marine SHY 1-1 du genre *Alteromonas* sur une structure marine, par exemple un bateau ou un filet de pêche, permet de prévenir l'encrassement de la structure par les micro- et macro-organismes. Hayase et al. ont également isolé quatre autres bactéries marines mais sans parvenir à leur faire produire un EPS par fermentation.

La demande US 2004/0258655 décrit un agent produit par une bactérie marine de la souche DSM 15590 issue des eaux côtières de l'est de Hong Kong et du genre *Vibrio alginolyticus* ou *Vibrio proteolyticus* comme agent anti-salissures contre les organismes salissants *Hydroides elegans* (vers tubicole), *Bugula neritina* (Bryozoaire), and *Balanus amphitrite* (Bernacle). La demand JP H03 239766 décrit un agent de contrôle du dépôt de biosalissures obtenu par culture de champignon choisi parmi Agrobacterium, Vibrio, Baccilus, Escherichia at Saccharomyces.

Cela étant, il est difficile de prévoir quelles bactéries marines sont susceptibles de former un EPS, et parmi celles-ci, quelles sont celles susceptibles de former un EPS ayant des propriétés de prévention du dépôt de biosalissures sans posséder une activité biocide. En effet, tous les EPS produits par fermentation de bactéries marines ne sont pas susceptibles de prévenir le dépôt de biosalissures.

Il existe un besoin de développer d'autres méthodes de prévention du dépôt de biosalissures avec un agent non biocide.

A cet effet, l'invention concerne un procédé de prévention du dépôt de biosalissures sur une surface d'un matériau en contact avec un milieu aqueux ou avec de l'air dont l'humidité relative est supérieure ou égale à 90%, comprenant le traitement de cette surface avec un EPS obtenu par fermentation d'une bactérie du genre *Vibrio parahaemolyticus.*

Par « biosalissures », on entend le biofilm, les microorganismes (bactéries, algues microscopiques), dit « microfouling » en anglais, et les macroorganismes (algues macroscopiques, balanes, moules...), dit « macrofouling » en anglais.

L'EPS utilisé dans le procédé selon l'invention est obtenu par fermentation d'une bactérie du genre *Vibrio parahaemolyticus.*

Généralement, la bactérie permettant de produire par fermentation l'EPS est une bactérie issue d'un milieu marin non atypique.

Un milieu marin non atypique est un milieu marin naturel dont les conditions de températures, pH, salinité, de pression et/ou d'oxygénation ne sont pas extrêmes. Un écosystème hydrothermal profond n'est donc pas un milieu marin non atypique. Généralement, dans un milieu marin non atypique :
- la température est comprise de 5 à 40°C, notamment de 10 à 35°C, de préférence de 15 à 35°C, et/ou
- la pression est comprise de 0,1 à 5 bars, notamment de 1 à 3 bars, de préférence de 1 bar à 2 bars, et/ou
- le pH est compris de 3 à 10, notamment de 4 à 9, de préférence de 5 à 8,5, et/ou
- la salinité est comprise de 10 à 75 g/l, notamment de 12 à 60 g/l, de préférence de 15 g/L à 52 g/l, et/ou
- la pression partielle en oxygène dissous est supérieure ou égale à 10%, typiquement supérieure ou égale à 20%, notamment supérieure ou égale à 35%, de préférence supérieure ou égale à 50%.

La pression partielle en oxygène dissous est typiquement mesurée par une sonde à pression partielle en oxygène dissous. La salinité est typiquement ajustée en introduisant la quantité de sel adéquate dans le fermenteur.

Le milieu marin non atypique peut être exposé à la lumière ou non.

Typiquement, ce milieu non atypique est le littoral breton à une profondeur de 0 à 40 m, notamment de 0 à 20 m, de préférence de 0 à 10 m, par exemple à une profondeur de 2 m. En effet, les phénomènes de marée peuvent faire grandement la hauteur de la colonne d'eau à un endroit donné.

Les bactéries issues d'un milieu marin non atypique ne sont pas extrémophiles. Il s'agit par exemple de bactéries mésophiles, de bactéries aérobies, de bactéries non acidophiles et non alcalinophiles ou de bactéries non halophiles.

De préférence, la bactérie est choisie parmi deux bactéries déposées auprès de la collection nationale de cultures de microorganismes (CNCM) par la société Polymaris Biotechnology, Aéropôle Centre, 29600 Morlaix, France :
- le 23 décembre 2015 sous le numéro d'ordre CNCM I-5036 avec la référence d'identification ENGIE 1-5 PB, ou
- le 23 décembre 2015 sous le numéro d'ordre CNCM I-5037 avec la référence d'identification ENGIE 1-12 PB.

Ces deux bactéries sont issues du littoral breton et peuvent être trouvées vers 2 mètres de profondeur en fonction de la marée à laquelle les prélèvements ont été réalisés.

Ci-après, l'EPS susceptible d'être obtenu par fermentation de la bactérie sous le numéro d'ordre CNCM I-5036 est nommé EPS F2, et l'EPS susceptible d'être obtenu par fermentation de la bactérie sous le numéro d'ordre CNCM I-5037 est nommé EPS F4.

L'EPS utilisé dans le procédé selon l'invention peut par exemple être préparé en suivant le protocole de fermentation suivant :
La souche bactérienne est cultivée sur milieu 2216E (Oppenheimer, J Mar. Res., 1952, 11, 10-18) enrichi avec du glucose (30 g/l). La production est effectuée à 30°C et à pH 7,4 en fermenteur de 5 litres contenant 3 litres du milieu 2216E-glucosé, tel que décrit par P. Vincent et al. dans Appl. Environ. Microbioj, 1994, 60, 4134-4141. Après environ 48 heures de culture, la fermentation est stoppée.

L'EPS peut par exemple être récupéré avec le traitement suivant :
Après dilution de moitié avec de l'eau distillée, les bactéries sont séparées du milieu de culture par une centrifugation à 20 000 g pendant 2 heures. L'EPS n'est pas lié chimiquement à la bactérie qui le produit. Il est donc facile de le séparer de la biomasse bactérienne par centrifugation.

L'EPS issu de la centrifugation peut être utilisé sans purification ultérieure. De préférence, l'EPS est purifié du milieu de culture par ultrafiltration contre de l'eau.

Ainsi, le surnageant issu de la centrifugation peut être diafiltré contre de l'eau, par exemple de l'eau distillée, sur des membranes présentant un seuil de coupure donné, par exemple de 150 kDa. La diafiltration peut être contrôlée par conductimétrie, notamment jusqu'à atteindre une conduction du perméat de 30 microsiemens.

L'EPS peut alors être conservé en solution aqueuse. Le produit issu de la diafiltration peut également être lyophilisé pour permettre le stockage de l'EPS sous forme sèche.

Dans le procédé selon l'invention, l'EPS peut être utilisé sous forme de solution, généralement de solution aqueuse, ou sous forme sèche. Lorsqu'il est utilisé sous forme sèche, le procédé comprend typiquement une étape de dissolution de l'EPS dans une solution, typiquement une solution aqueuse. C'est cette solution comprenant l'EPS qui servira à traiter la surface. Ces solutions aqueuses d'EPS peuvent être sous une forme « prêt à l'emploi » (de préférence avec une concentration en EPS telle que décrite ci-dessous) ou sous une forme concentrée (de préférence avec une concentration en EPS supérieure à celle décrite ci-dessous). Dans ce dernier cas, le procédé comprend alors généralement une étape de dissolution de la solution concentrée (solution mère) pour obtenir la solution à la concentration désirée en EPS (solution fille), puis l'étape de traitement de la surface du matériau avec cette solution.

Généralement, dans le procédé selon l'invention, la concentration en EPS de la solution d'EPS qui sert à traiter la surface du matériau est de 10⁻⁷% à 0,02% en poids, notamment de 5×10⁻⁷% à 0,01% en poids, typiquement de 10⁻⁶% à 5×10⁻³% en poids, de préférence de 1×10⁻⁶% à 1×10⁻³% en poids, par exemple de l'ordre de 5×10⁻⁶% en poids par rapport au poids de la solution, notamment aqueuse. Aussi, si l'EPS est utilisé sous forme de solution, la solution d'EPS avec laquelle la surface est traitée et/ou la solution d'EPS introduite dans le milieu aqueux en contact avec cette surface, a de préférence une telle concentration. Cette concentration peut être réduite par optimisation de la fréquence de traitement. Si l'EPS est introduit sous forme de poudre dans le milieu aqueux en contact avec le matériau, la masse d'EPS introduite est choisie de manière que la concentration en EPS dans le milieu aqueux soit telle que définie ci-dessus. Le milieu aqueux comprenant l'EPS correspond alors à la solution aqueuse comprenant l'EPS à une concentration de 10⁻⁷% à 0,02% en poids par rapport au poids du milieu aqueux.

Généralement, l'EPS utilisé dans le procédé selon l'invention a une masse moléculaire au pic mesurée par chromatographie liquide d'exclusion stérique de plus de 1 000 000 Da. L'EPS a donc une masse molaire au pic mesurée par chromatographie liquide d'exclusion stérique de plus de 1 000 000 g/mol. La masse moléculaire est typiquement évaluée par chromatographie liquide d'exclusion stérique (HPSEC) en utilisant une colonne de perméation sur gel et une évaluation en fonction de standards Dextran. Les masses moléculaires au pic sont exprimées en équivalent Dextran. Les EPS F2 et F4 ont une masse moléculaire mesurée par chromatographie liquide d'exclusion stérique de plus de 1 000 000 Da.

De préférence, l'EPS utilisé dans le procédé selon l'invention comprend moins de 5% massique, notamment moins de 1% massique de sulfate par rapport à la masse sèche de l'EPS. L'EPS peut être exempt de groupe sulfate. La proportion massique en sulfate peut par exemple être déterminée par dosage colorimétrique en suivant la procédure décrite dans l'article (Craigie, J. S., Wen Z. C., Van der Meer J. P. (1984) Botanica Marina 25 55-61).

De préférence, l'EPS utilisé dans le procédé selon l'invention comprend des unités N-acétyl glucosamine. Selon une première alternative, l'EPS utilisé dans le procédé selon l'invention comprend (ou même consiste en) des unités N-acétyl glucosamine, galactose et glucose. Selon une seconde alternative, l'EPS utilisé dans le procédé selon l'invention comprend (ou même consiste en) des unités N-acétyl glucosamine et acide galacturonique. La composition osidique est par exemple déterminée par chromatographie en phase gazeuse après méthanolyse de l'EPS. L'analyse de la composition osidique est effectuée par comparaison à des standards traités dans les mêmes conditions expérimentales.

L'EPS F2 est un polymère comprenant moins de 1% massique de sulfate par rapport à la masse sèche de l'EPS F2 et comprenant des unités N-acétyl glucosamine, galactose et glucose.

L'EPS F4 est un polymère comprenant moins de 1% massique de sulfate par rapport à la masse sèche de l'EPS F4 et comprenant des unités N-acétyl glucosamine et acide galacturonique.

Sans vouloir être liés par une théorie particulière, une première hypothèse serait que les EPS forment un film sur la surface, qui pourrait entrer en compétition avec le film primaire composé des matières organiques présentent dans le milieu qui se forme sur la surface du matériau. Une seconde hypothèse serait que les EPS interviennent sur les récepteurs des microorganismes présents dans l'eau traitée et réduisent, voire empêchent, la fixation de ces microorganismes sur la surface du matériau. Cette seconde hypothèse est la plus probable lorsque l'EPS est introduit en concentration très faible dans le milieu aqueux, notamment à des concentrations inférieures ou égales à 0,0001% en poids par rapport au poids de la solution. Ces deux mécanismes peuvent exister tous les deux. Le procédé selon l'invention permet de déstabiliser le biofilm néfaste qui est à l'origine de la formation du macrofouling. En rendant ce biofilm instable, on empêche la formation du macrofouling.

Généralement, le traitement de la surface d'un matériau avec un EPS tel que défini ci-dessus n'inhibe pas l'adhésion bactérienne sur la surface. Le nombre de bactéries adhérant sur une surface ayant été traitée avec un EPS tel que défini ci-dessus est du même ordre de grandeur que le nombre de bactéries sur une surface non traitée avec un tel EPS. Des bactéries adhèrent sur le film d'EPS formé. Toutefois, ces bactéries sont sous forme « résistantes », par exemple sous forme capsulée ou sporulée, car le film d'EPS déstabilise leur développement. Aussi, le biofilm ne se forme pas. Comme le biofilm ne se forme pas et que sa présence est nécessaire pour l'adhésion des micro- et macro-organismes, les EPS tels que définis ci-dessus permettent également de prévenir l'adhésion de manière stable des micro- et macro-organismes.

Par ailleurs, la diversité microbiologique est généralement plus faible sur une surface ayant été traitée avec un EPS tel que défini ci-dessus par rapport à une surface non traitée avec un tel EPS. On a en effet observé une différence de population bactérienne sur une surface ayant été traitée avec un EPS tel que défini ci-dessus par rapport à une surface non traitée avec un tel EPS. Il semblerait donc que seules certaines bactéries sont susceptibles d'adhérer sur le film d'EPS recouvrant les surfaces, mais que celles qui parviennent à adhérer ne se développent cependant pas, car, généralement, aucune prolifération bactérienne ni formation de biofilm indésirable ne sont observées.

Les EPS utilisés dans le procédé selon l'invention sont donc avantageusement non biocides et ne présentent pas d'effet anti-microbien.

De plus, les EPS utilisés dans le procédé selon l'invention sont avantageusement biodégradables.

Le procédé comprend le traitement de la surface d'un matériau en contact avec un milieu aqueux ou avec de l'air dont l'humidité relative est supérieure ou égale à 90% avec un EPS tel que défini ci-dessus. Par « la surface d'un matériau en contact », il est sous-entendu qu'il peut s'agir d'une partie de la surface du matériau ou de la totalité de la surface du matériau. Généralement, le traitement de la surface du matériau avec l'EPS tel que défini ci-dessus comprend la mise en contact de cette surface avec cet EPS.

Lorsque le matériau est en contact avec un milieu aqueux, la surface du matériau est typiquement traitée avec l'EPS :
- soit en isolant la surface du matériau dudit milieu aqueux puis en la traitant avec l'EPS, généralement sous forme de solution, puis en remettant la surface en contact avec ledit milieu aqueux.

Selon une première alternative, on peut extraire le matériau du milieu aqueux avec lequel il est en contact, traiter sa surface avec une solution d'EPS puis remettre le matériau dans le milieu aqueux. A titre illustratif, si la surface est une coque de bateau, on peut mettre le bateau en cale sèche, traiter sa surface avec une solution d'EPS puis remettre le bateau à l'eau. Si le matériau est une piscine, on peut vider la piscine, traiter ses parois internes avec une solution d'EPS, (ou bien remplir la piscine d'une solution d'EPS puis la vider), puis remplir la piscine d'eau.

Selon une seconde alternative, on peut remplacer le milieu aqueux en contact avec le matériau par une solution d'EPS, ce par quoi la surface du matériau est traitée par l'EPS, puis remplacer la solution d'EPS par le milieu aqueux. A titre illustratif, si la surface du matériau est une canalisation, on peut stopper la circulation du milieu aqueux dans la canalisation, injecter dans la canalisation une solution d'EPS, puis refaire circuler le milieu aqueux dans la canalisation.
- soit en introduisant l'EPS dans le milieu aqueux. Comme le milieu aqueux est en contact avec la surface du matériau, la surface du matériau est traitée par l'EPS. L'EPS peut être introduit dans le milieu aqueux sous forme de solution, généralement aqueuse, ou sous forme sèche. Introduire l'EPS sous forme sèche dans le milieu aqueux requiert de prendre en compte le temps de solubilisation et de réhydratation de l'EPS. Une introduction sous forme de solution est donc préférée. A titre illustratif, si la surface du matériau est une canalisation dans laquelle circule un milieu aqueux, on peut introduire l'EPS dans le milieu aqueux. Si le matériau est une piscine, on peut introduire l'EPS dans l'eau de la piscine.

Bien sûr, il est possible de traiter la surface du matériau avec l'EPS avant la mise en contact de cette surface avec le milieu aqueux. A titre illustratif, on peut traiter les parois d'une piscine avec l'EPS avant qu'elle ne soit remplie d'eau, ou injecter une solution d'EPS dans une canalisation avant que le milieu aqueux n'y ait circulé.

Généralement, lorsque la surface du matériau est en contact avec de l'air dont l'humidité relative est supérieure ou égale à 90%, la surface est traitée avec de l'EPS sous forme de solution, typiquement aqueuse, de préférence à une concentration en EPS telle que définie ci-dessus.

Le traitement de la surface avec l'EPS peut être effectuée par toute méthode, par exemple par spray, au rouleau, à la brosse, au pinceau, en immergeant le matériau ou une partie du matériau dans une solution contenant l'EPS, en injectant la solution d'EPS dans le milieu aqueux en contact avec la surface...

De préférence, la température de la surface du matériau traitée avec l'EPS et/ou la température du milieu aqueux dans lequel l'EPS est introduit est comprise de 1 à 90°C, typiquement de 2 à 45°C, notamment de 5 à 35°C, en particulier de 10 à 30°C.

Le traitement de la surface du matériau avec l'EPS peut être ponctuel ou répété. De préférence, ce traitement est répété, afin de régénérer le film d'EPS sur la surface du matériau qui se dégrade au cours du temps. L'EPS est en effet biodégradable.

Lorsque le traitement de la surface du matériau avec l'EPS est répété, la fréquence entre deux traitements peut être variable en fonction de la concentration de l'EPS en solution et/ou des matières organiques et microorganismes présentes dans le milieu aqueux ou dans l'air et/ou de la température du milieu aqueux. En effet, généralement, plus le milieu comprend de matières organiques susceptibles de former le biofilm indésirable et de microorganismes susceptibles de se déposer et de se développer sur ce biofilm, plus la fréquence entre deux traitements devra être élevée. De même, généralement, plus la température du milieu aqueux est élevée, plus le dépôt de biosalissures est important. Ainsi, typiquement, plus la température du milieu aqueux est élevée, plus la fréquence des traitements est élevée.

Le traitement à base d'EPS permet de prévenir le dépôt de biosalissures sur la surface, et de faire diminuer la formation du biofilm en cours de formation. Par contre, les EPS ne permettent pas de supprimer des biosalissures (notamment le biofilm) déposées préalablement au traitement EPS. Autrement dit, les EPS ne permettent pas de traiter totalement une surface d'un matériau déjà souillée par des biosalissures.

Aussi, le procédé selon l'invention peut comprendre l'élimination partielle ou totale des biosalissures présentes sur la surface du matériau par un agent autre qu'un EPS.

Cette élimination partielle ou totale peut être effectuée avec un agent biocide, par exemple par chloration (typiquement avec du dichlore ou un sel d'hypochlorite, comme l'hypochlorite de sodium, par exemple de l'eau de javel). Le traitement par un agent biocide peut être ponctuel ou répété. L'agent biocide est typiquement utilisé sous forme de solution, de préférence aqueuse, par exemple à une concentration de 1×10⁻⁵% à 5×10⁻³ en poids, notamment 1×10⁻⁴ à 1×10⁻³% en poids, par exemple de l'ordre de 5×10⁻⁴% en poids par rapport au poids de solution.

Cette élimination partielle ou totale est généralement effectuée avant le traitement de la surface avec l'EPS ou, lorsque les traitements sont répétés, entre deux traitements successifs. Par exemple, lorsque des biosalissures se sont déposées sur la surface malgré le(s) traitement(s) de la surface avec l'EPS (par exemple parce que deux traitements successifs ont été trop espaces dans le temps pour pouvoir prévenir complètement le dépôt de biosalissures), le procédé peut comprendre une étape d'élimination partielle ou totale des biosalissures présentes sur la surface du matériau, qui sera suivie d'un traitement de la surface avec l'EPS. Un traitement combiné par un EPS et par un agent biocide permet de diminuer la quantité d'EPS et donc de diminuer les coûts, mais également de diminuer les quantités d'agents biocides utilisées par rapport à un traitement uniquement à base d'agent biocide.

Dans un mode de réalisation, le procédé comprend :
- le traitement répété de la surface avec un EPS avec une fréquence de traitement par l'EPS de une fois par heure à une fois par semaine, de préférence une fois toutes les 12 heures à une fois tous les trois jours, par exemple une fois par jour, et
- le traitement répété de la surface avec un agent biocide avec une fréquence de traitement par l'agent biocide d'une fois par heure à une fois par semaine, de préférence une fois par jour à une fois tous les cinq jours, par exemple une fois tous les deux jours.

Ces fréquences sont adaptées pour prévenir le dépôt de biosalissures sur la surface, même avec des concentrations en EPS et/ou en agent biocide peu élevées, par exemple avec une concentration en EPS de 1×10⁻⁶% à 1×10⁻³% en poids par rapport au poids de la solution, et/ou avec une concentration en agent biocide de 1×10⁻⁵% à 5×10⁻³% en poids par rapport au poids de solution. La prévention efficace de dépôt de biosalissures avec d'aussi faibles quantités d'EPS et d'agent biocide est particulièrement surprenante.

Par ailleurs, le procédé selon l'invention peut comprendre le suivi du dépôt de biosalissures, et notamment la formation du biofilm, sur la surface du matériau. Ce suivi est notamment utile pour déterminer la fréquence de traitement de la surface avec l'EPS.

Ce suivi peut par exemple être fait visuellement ou par analyse physique et/ou chimique de la surface.

Lorsque la surface est électriquement conductrice, typiquement une surface métallique, le suivi peut être effectué en suivant :
- l'évolution de la densité de courant de la surface électriquement conductrice dans le temps, et/ou
- l'évolution dans le temps du potentiel électrochimique de la surface électriquement conductrice par rapport à une électrode de référence, par exemple une électrode au calomel saturé (ECS).

En effet, le dépôt de biosalissures sur des matériaux électriquement conducteurs comme l'inox, en particulier la formation du biofilm, induit des variations de la densité de courant de la surface électriquement conductrice dans le temps et du potentiel électrochimique de la surface électriquement conductrice. Par exemple, dans l'eau de mer naturelle, le développement du biofilm sur une surface en acier inoxydable :
- fait varier sa différence de potentiel en circuit ouvert vers l'ennoblissement (passant de environ -100 mV à autour de +300 mV par rapport à une électrode de référence ECS),
- fait augmenter son efficacité cathodique (notamment la réduction cathodique de l'oxygène dissous), ce qui favorise l'initiation et la propagation de la corrosion. Mesurer la densité de courant de la surface électriquement conductrice dans le temps permet de quantifier l'efficacité cathodique du matériau électriquement conducteur.

Le procédé peut comprendre le suivi du dépôt de biosalissures, et notamment la formation du biofilm, sur la surface du matériau puis le traitement de la surface avec l'EPS tel que défini ci-dessus lorsque le dépôt de biosalissures dépasse un seuil donné (ou un pourcentage de variation donné pendant une durée donnée).

Par exemple, lorsque la surface est électriquement conductrice, typiquement une surface métallique, le procédé peut comprendre :
- le suivi du dépôt de biosalissures, et notamment la formation du biofilm, en suivant :
   - l'évolution de la densité de courant de la surface électriquement conductrice dans le temps, et/ou
   - l'évolution dans le temps du potentiel électrochimique de la surface électriquement conductrice par rapport à une électrode de référence, puis
- le traitement de la surface avec l'EPS tel que défini ci-dessus lorsque la densité de courant et/ou le potentiel électrochimique a(ont) atteint un(des) seuil(s) donné(s).

Dans le procédé selon l'invention, au moins une partie d'une surface d'un matériau en contact avec un milieu aqueux ou avec de l'air dont l'humidité relative est supérieure ou égale à 90% est traitée avec un EPS tel que défini ci-dessus.

La surface est la surface d'un matériau organique ou inorganique dont la nature peut être variée, par exemple un métal, un polymère, un matériau de construction.

Les métaux préférés sont le cuivre, le titane et l'acier, notamment inoxydable, en particulier l'acier inoxydable 316L ou l'acier inoxydable 2507. Le polymère préféré est le polyéthylène, notamment le polyéthylène haute densité (PEHD). Du béton, du mortier, du verre ou du bois sont des matériaux de construction usuels.

Au moins une partie de la surface du matériau est en contact avec un milieu aqueux, ou avec de l'air dont l'humidité relative est supérieure ou égale à 90%, notamment supérieure ou égale à 95%, de préférence égale à 100% (air saturé en eau). L'humidité relative de l'air, ou degré hygrométrique, couramment notée ϕ, correspond au rapport de la pression partielle de la vapeur d'eau contenue dans l'air sur la pression de vapeur saturante (ou tension de vapeur) à la même température. Elle est donc une mesure du rapport entre le contenu en vapeur d'eau de l'air et sa capacité maximale à en contenir dans ces conditions. Elle est mesurée à l'aide d'un hygromètre.

Lorsqu'au moins une partie de la surface du matériau est en contact avec un milieu aqueux, le matériau est typiquement un contenant ou une partie d'un contenant d'un milieu aqueux, par exemple un réservoir d'eau, une piscine, une canalisation d'eau douce ou de mer, comme les canalisations d'un terminal méthanier ou d'une centrale thermique, ou bien un matériau en contact avec de l'eau, par exemple une coque ou une hélice de bateau, ou les parties immergées d'une infrastructure, par exemple un terminal méthanier ou une centrale thermique ...Le matériau peut alors être partiellement ou totalement immergé dans le milieu aqueux.

Le milieu aqueux peut par exemple être de l'eau douce ou de l'eau de mer. Le milieu aqueux peut être stagnant (par exemple de l'eau stagnante) ou mouvant (par exemple de l'eau agitée ou le milieu marin naturel), notamment circulant (par exemple de l'eau circulant dans une canalisation).

L'invention est illustrée au vu des exemples et des figures qui suivent.
Figure 1 : Proportion d'oxygène dissous en ppm par rapport au temps en jours dans le bac comprenant de l'eau de mer (témoin) (ref), pour l'EPS F2 (F2), pour l'EPS F4 (F4) et pour l'EPS F5 (comparatif) (F5) (exemple 1).
Figure 2 : Différence de potentiel par rapport à une électrode au calomel saturé en mV par rapport au temps en jours dans le bac comprenant de l'eau de mer (témoin) (ref), pour l'EPS F2 (F2), pour l'EPS F4 (F4) et pour l'EPS F5 (comparatif) (F5) (exemple 1).
Figure 3 : Dénombrement par microscopie à épifluorescence des bactéries pour chaque bac : témoin eau de mer (ref), EPS F2, F4 ou F5 (comparatif) et pour chaque matériau béton (histogrammes gris), PEHD (histogrammes noirs) ou acier inoxydable 316L (histogrammes blancs) (exemple 1).
Figure 4 : Schéma illustrant le système expérimental utilisé pour l'exemple 2.1.
Figure 5 : Densité de courant (A/m²) mesuré dans le capteur de biofilm en fonction du temps en jour pour l'eau de mer (témoin) (ref) ou pour l'EPS F2 dans l'eau de mer (F2) (exemple 2.1).
Figure 6 : Potentiel (V) mesuré dans le capteur de biofilm en fonction du temps en jour pour l'eau de mer (témoin) (ref) ou pour l'EPS F2 dans l'eau de mer (F2) (exemple 2.1).
Figure 7 : Différence de montée de potentiel mesurée au niveau du tube en acier inoxydable 316L de la boucle expérimentale traitée par l'EPS F2 et celle ne contenant que de l'eau de mer (témoin). Les rectangles noirs sur l'axe des abscisses correspondent aux introductions de l'EPS (exemple 2.1).
Figure 8 : Schéma illustrant le système expérimental utilisé pour les exemples 2.2 et 3.
Figure 9 : Potentiel (V) de l'échantillon en acier inoxydable 316L présent dans le réservoir de 45L en fonction du temps en jour dans l'expérience avec de l'eau de mer (témoin) (ref), dans l'expérience avec la solution à 0,001% d'EPS F2 dans d'eau de mer (F2), dans l'expérience avec la solution de 5 ppm d'hypochlorite de sodium dans l'eau de mer (Cl). Les rectangles noirs sur l'axe des abscisses correspondent aux introductions de l'EPS (uniquement pour l'expérience avec la solution d'EPS F2) (exemple 2.2).
Figure 10 : Potentiel (V) du tube en acier inoxydable 316L du module C de la boucle en fonction du temps en jour dans l'expérience avec de l'eau de mer (témoin) (ref), dans l'expérience avec la solution à 0,001% d'EPS F2 dans d'eau de mer (F2), dans l'expérience avec la solution de 5 ppm d'hypochlorite de sodium dans l'eau de mer (Cl). Les rectangles noirs sur l'axe des abscisses correspondent aux introductions de l'EPS (uniquement pour l'expérience avec la solution d'EPS F2) (exemple 2.2).
Figure 11 : Potentiel (V) de l'échantillon en acier inoxydable 316L présent dans le réservoir de 45L en fonction du temps en jour dans l'expérience avec de l'eau de mer (témoin) (ref) et dans l'expérience avec la solution d'EPS F2 dans d'eau de mer / solution d'hypochlorite de sodium dans d'eau de mer (F2-Cl). Les rectangles noirs sur l'axe des abscisses correspondent aux introductions de l'EPS et les étoiles grises aux introductions d'hypochlorite de sodium (exemple 3).
Figure 12 : Potentiel (V) du tube en acier inoxydable 316L du module B de la boucle en fonction du temps en jour dans l'expérience avec de l'eau de mer (témoin) (ref) et dans l'expérience avec la solution d'EPS F2 dans d'eau de mer / solution d'hypochlorite de sodium dans d'eau de mer (F2-Cl). Les rectangles noirs sur l'axe des abscisses correspondent aux introductions de l'EPS et les étoiles grises aux introductions d'hypochlorite de sodium (exemple 3).
Figure 13 : Potentiel (V) du tube en acier inoxydable 316L du module C de la boucle en fonction du temps en jour dans l'expérience avec de l'eau de mer (témoin) (ref) et dans l'expérience avec la solution d'EPS F2 dans d'eau de mer / solution d'hypochlorite de sodium dans d'eau de mer (F2-Cl). Les rectangles noirs sur l'axe des abscisses correspondent aux introductions de l'EPS et les étoiles grises aux introductions d'hypochlorite de sodium (exemple 3).
Figure 14 : Potentiel (V) de l'échantillon en acier inoxydable 316L présent dans le réservoir de 150L du module D en fonction du temps en jour dans l'expérience avec de l'eau de mer (témoin) (ref) et dans l'expérience avec la solution d'EPS F2 dans d'eau de mer / solution d'hypochlorite de sodium dans d'eau de mer (F2-Cl). Les rectangles noirs sur l'axe des abscisses correspondent aux introductions de l'EPS et les étoiles grises aux introductions d'hypochlorite de sodium (exemple 3).

Dans les exemples ci-dessous ont été utilisés les EPS F2 et F4 obtenus à partir des bactéries déposées respectivement sous les numéros d'ordre CNCM I-5036 et CNCM I-5037 par un procédé de fermentation tel que défini ci-dessus.

A titre comparatif, on a également utilisé un EPS, dit EPS F5, produit par fermentation (selon le protocole décrit ci-dessus) d'une bactérie du genre *Cobetia Marina* déposée auprès de la collection nationale de cultures de microorganismes (CNCM) le 23 décembre 2015 sous le numéro d'ordre CNCM I-5038 avec la référence d'identification ENGIE 2-68 PB par la société Polymaris Biotechnology, Aéropôle Centre, 29600 Morlaix, France. Cet EPS F5 est un polymère :
- comprenant 10 à 20% massique de sulfate par rapport à la masse sèche totale de l'EPS,
- comprenant des unités rhamnose, acide galacturonique, galactose, glucose, et N-acétyl glucosamine, et
- de masse moléculaire au pic mesurée par chromatographie liquide d'exclusion stérique de plus de 1 000 000 Da.

Les surfaces testées étaient du PEHD (PE 80, SIMONA), de l'acier inoxydable 316L et du béton.

Le potentiel électrochimique de l'acier inoxydable 316L par rapport à des électrodes Ag/AgCl calibrés avant les essais par rapport à une électrode de référence au calomel saturée a été suivi. La mesure en continu du potentiel était assurée par un système d'acquisition EPC8 de chez NKE.

Pour les trois types de surface, la colonisation bactérienne a été évaluée par des observations microscopiques en utilisant des techniques d'épifluorescence.

### Exemple 1 : Prévention du dépôt de biosalissures en eau de mer non circulante

Chacun des trois EPS a été dissous dans un bac contenant 15 litres d'eau de mer naturelle à une concentration de 0,05% en masse sous agitation (200 tours par minute). L'eau de mer des bacs n'a pas été renouvelée pendant l'expérience, l'agitation a été maintenue. L'eau de mer provenait de la rade de Brest et présente les caractéristiques résumées dans le tableau 1 suivant :

**Tableau 1 : Caractéristiques de l'eau de mer de la rade de Brest utilisée dans les essais**

| | |
|---|---|
| Température | 17 ±1°C |
| pH | 8.1 ±0.1 |
| Conductivité | 52 ±1 mS/cm |
| Oxygène dissous | 8.5 ±0.2 ppm |

4 bacs ont été utilisés : 3 bacs contenant chacun un EPS dans l'eau de mer et 1 bac témoin contenant uniquement de l'eau de mer. Dans chacun des bacs, 9 échantillons ont été exposés : 3 échantillons d'acier inoxydable, 3 échantillons de béton et 3 échantillons de PEHD. La dimension de chaque échantillon était approximativement 5cm × 5cm.

Pour éviter que les échantillons de PEHD ne flottent à la surface, ils ont été accrochés à un support par une ficelle.

Les échantillons d'acier inoxydable monitorés en continu ont été suspendus par un fil de titane afin d'assurer un contact électrique pour les mesures de potentiel électrochimique.

### • Suivi des pH, températures, et teneurs en oxygène dissous dans l'eau des bacs

Le pH, la température, et la teneur en oxygène dissous (en immergeant en continu une sonde à oxygène) dans l'eau des bacs ont été mesurés tous les jours.

La température dans les bacs était comprise de 16 et 18°C pendant les 14 jours de l'essai.

Les pH des bacs contenant les EPS évoluent globalement entre 7,25 et 8,00, tout comme l'eau de mer. Une légère acidification du milieu contenant l'EPS F5 autour de pH 7,30 a été observée en fin d'essai à 14 jours.

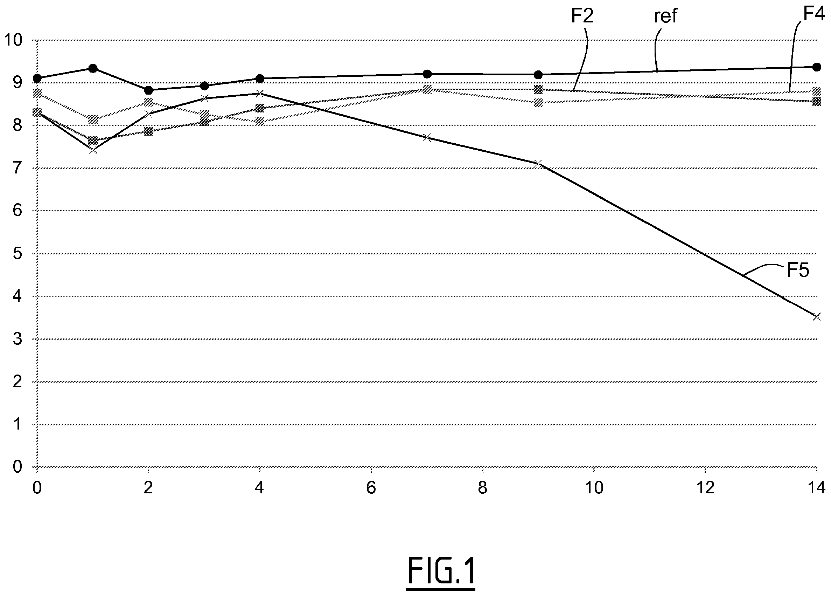

La figure 1 présente l'évolution de l'oxygène dissous dans chacun des milieux testés.

D'après les résultats de la figure 1, pour l'eau de mer et pour les milieux F2 et F4, la teneur en oxygène dissous reste constante (proche de la saturation) pendant toute la durée de l'essai. Dans le milieu F5, on remarque une diminution de la teneur en oxygène dissous initiée à partir du 6ème jour pour atteindre 3,5 ppm après 14 jours. Cette diminution pourrait être corrélée à la légère acidification du milieu observée.

### • Potentiel électrochimique de l'inox

L'expérimentation a duré 7 jours pour l'ensemble des matériaux avant prélèvement des échantillons.

Toutefois, un des trois échantillons en acier inoxydable a été laissé plus longtemps et son potentiel de corrosion a été mesuré pendant 14 jours par rapport à des électrodes Ag/AgCl calibrées avant l'essai par rapport à une électrode de référence au calomel saturée (ECS).

La présence d'un biofilm sur une surface métallique telle que l'acier inoxydable 316L a pour conséquence une évolution du potentiel de corrosion selon une cinétique variable et fonction des conditions physico-chimiques et microbiologiques du milieu. Cette évolution induit un risque de corrosion, notamment une corrosion par piqûre et rupture du film passif sur de l'acier inoxydable 316L. La présence de ce biofilm est la première étape du dépôt des biosalissures micro- et macroscopiques.

Généralement, le potentiel de l'acier inoxydable en eau de mer renouvelée est mesuré entre -100 et -200 mV/ECS à l'immersion. Il est typiquement stable pendant 3 à 15 jours selon la température ou la saison, puis il augmente jusqu'à des valeurs avoisinant les +300 mV/ECS. En effet, la formation d'un biofilm indésirable en surface provoque une augmentation du potentiel de corrosion. Le risque d'initiation et de propagation de la corrosion localisée sur l'acier inoxydable devient alors plus important.

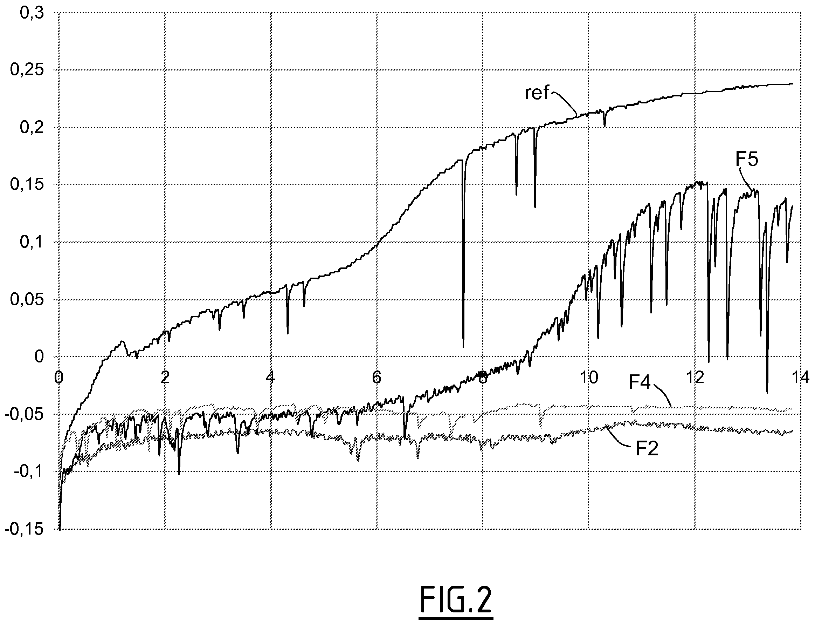

La figure 2 présente l'évolution du potentiel électrochimique de l'acier inoxydable dans les différents milieux pendant toute la durée de l'essai.

D'après la figure 2, en eau de mer, l'augmentation caractéristique du potentiel de - 100 à +250 mV due à la formation du biofilm indésirable a eu lieu après 6 jours.

Dans les milieux où les EPS ont été introduits, seuls les échantillons d'acier inoxydable exposés dans le milieu F5 ont présentés une montée du potentiel de corrosion de -50 à +150 mV après 8 jours. Les brusques variations de potentiel observées sur la courbe F5 pourraient être corrélées à de l'initiation de corrosion puis à une repassivation de la surface.

Pour les échantillons exposés dans les milieux F2 et F4, le potentiel de l'acier inoxydable reste stable pendant les 14 jours d'essais entre -100 et -50 mV/ECS.

La stabilité des potentiels observée pour les EPS F2 et F4 est liée à la présence d'EPS dans le bac dans lequel sont immergées les différentes surfaces.

### • Evaluation visuelle des surfaces

Après immersion pendant 7 jours, une évaluation visuelle des échantillons a été réalisée.

Pour les échantillons témoins exposés en eau de mer (témoin), aucun dépôt macroscopique n'est observable, que ce soit sur l'inox, le béton ou le PEHD.

En ce qui concerne les échantillons immergés dans les bacs contenant F2 et F4, un film très fin, qui est probablement un film d'EPS, est observable sur toutes les surfaces et en particulier sur l'acier inoxydable et le PEHD. Ces surfaces présentent des rugosités assez faibles en comparaison avec le béton, qui pourrait permettre une accroche plus importante de l'EPS.

Pour les échantillons exposés dans le bac contenant F5, une quantité importante d'agglomérats visqueux recouvre une grande partie de la surface des échantillons, les surfaces des bacs et les électrodes de mesures. Ce sont très probablement des agglomérats d'EPS.

### • analyse microbiologique des surfaces par microscopie à épifluorescence

Les échantillons prélevés après 7 jours ont subi une analyse microbiologique de leurs surfaces par microscopie à épifluorescence. Cette technique permet une mesure de l'environnement microbien par addition de fluorochrome diaminidophénylindol (DAPI). Le fluorochrome marque l'ADN des microorganismes qui fluorescent alors en bleu. Après observations des échantillons au microscope, les cellules présentes ont été dénombrées à la surface de l'échantillon et une analyse des bactéries a été réalisée à partir de leur forme et de leur état général.

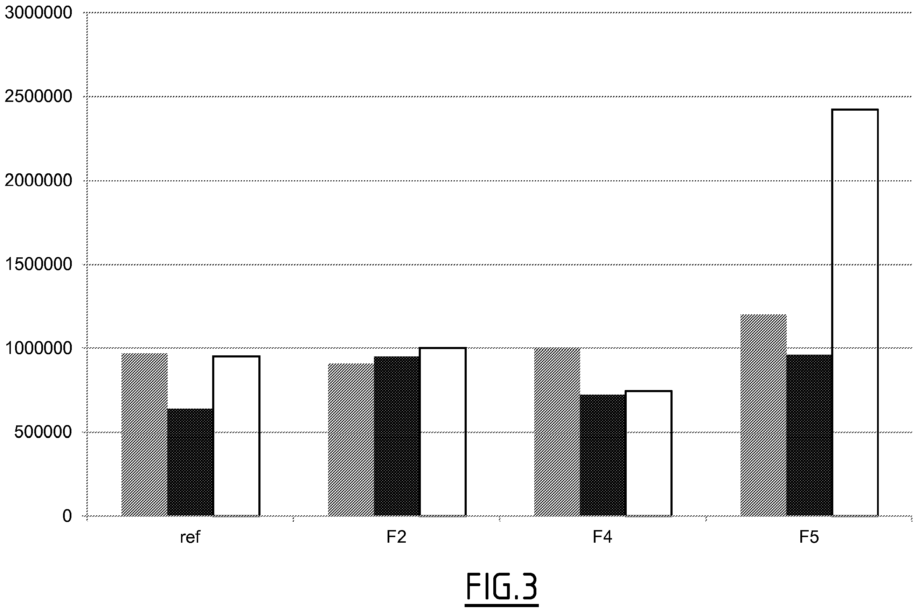

La figure 3 représente les résultats du dénombrement des bactéries pour chaque bac témoin eau de mer (ref), EPS F2, F4 ou F5.

Les EPS mis en solution dans les bacs utilisés au cours de ces essais ne sont pas bactéricides. En effet, dans aucun cas nous n'avons de diminution du nombre de bactéries à la surface des différents matériaux.

De plus, pour un même bac, le nombre de bactéries est peu variable en fonction de la nature de la surface. La nature de la surface influence peu ou pas l'activité des EPS.

La colonisation bactérienne sur les surfaces des différents matériaux immergés dans les bacs comprenant les EPS F2 et F4 est identique à celle du témoin eau de mer.

Dans le bac contenant l'EPS F5, la colonisation des surfaces est identique à celle du témoin « eau de mer » pour les matériaux béton et PEHD. Cependant, la colonisation est plus forte sur la surface en acier inoxydable 316L : l'acier inoxydable 316L traité avec l'EPS F5 est environ 2,5 fois plus colonisé par des bactéries que l'acier inoxydable 316L immergés dans le bac témoin eau de mer.

La morphologie des bactéries a également été étudiée.

Dans l'ensemble, les peuplements bactériens sont moyennement diversifiés : quelques formes filamenteuses sont notées ; elles témoignent en général d'un degré de hiérarchisation plus poussé du biofilm.

La colonisation sur les surfaces en inox et en béton traitées avec l'EPS F2 ou F4 est éparse (avec quelques formes filamenteuses en réseaux pour les surfaces en inox et en béton en contact avec l'EPS F2). Sur les surfaces en plastique traitées avec l'EPS F2 ou F4, les bactéries apparaissent plus ternes et certaines grosses bactéries sont mises en évidence : il pourrait s'agir de formes capsulées.

### Exemple 2 : Prévention du dépôt de biosalissures en eau de mer circulante

### Exemple 2.1. : Système expérimental comprenant un réservoir et une boucle

4 systèmes expérimentaux ont été testés : un témoin comprenant uniquement de l'eau de mer, un système expérimental comprenant l'EPS F2 dans de l'eau de mer, un système expérimental comprenant l'EPS F4 dans de l'eau de mer, un système expérimental comprenant l'EPS F5 dans de l'eau de mer, où chaque EPS est à une concentration de 0,01% (p/v).

Un système expérimental comprenait :
- un réservoir de 150 L muni d'une pompe permettant l'agitation et dans lequel est immergé une électrode de référence et un capteur de biofilm, et
- une boucle faite d'un tube de 40 mm de diamètre en PVC interrompu par un tube en acier inoxydable 316L, la surface du tube comprenant des coupons contenant chacun un matériau enrobé dans une résine époxy bi-composant (MécapreX IP) et poli. Les différents matériaux des coupons étaient: de l'acier inoxydable 316L, de l'acier inoxydable 2507, du PEHD (deux coupons), du béton (deux coupons). La boucle était munie d'une pompe et d'une vanne.

Le tube en acier inoxydable 316L, et chaque coupon en acier inoxydable 316L étaient reliés à un potentiomètre pour mesurer la différence de potentiel par rapport à l'électrode de référence.

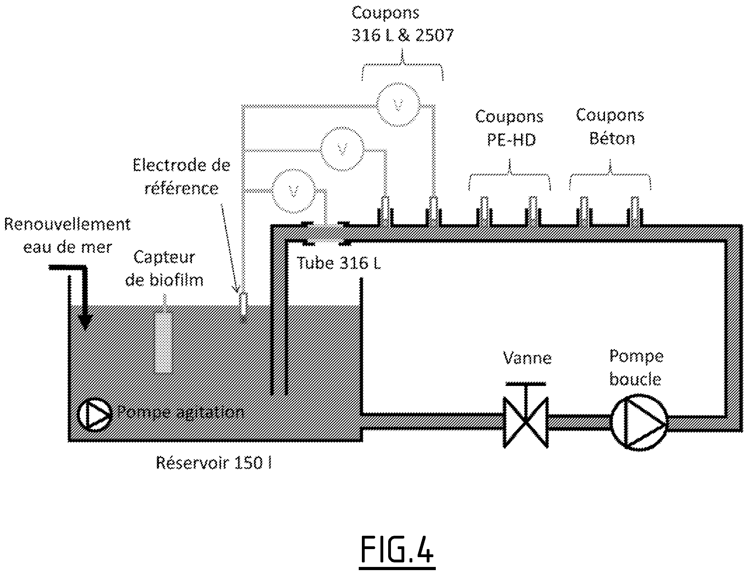

Le système expérimental utilisé est schématisé sur la figure 4.

Chaque coupon comprend le matériau testé (inox, PEHD ou béton) enrobé dans une résine époxy de manière que la surface du matériau testé soit au même niveau que le reste de la surface interne du tube en PVC. , c'est-à-dire que la surface du matériau testé ne fait pas saillie ou n'est pas en retrait par rapport au reste de la surface interne du tube en PVC.

Le capteur de biofilm était un capteur SCPC^{®} comprenant une anode en alliage de zinc galvanique (de BAC Corrosion Control A/S), une cathode super alliage duplex UNS S32750 et une électrode de pseudo-référence en zinc (ASTM B418 type 1). Ce capteur de biofilm permet de mesurer le potentiel lié à la formation de biofilm et le courant de réduction qui permet de quantifier l'activité du biofilm.

La vitesse de circulation dans la boucle était de 0,8 m/s.

L'eau de mer était renouvelée en continue à raison de 1L/min.

Dans chaque système expérimental, on a mesuré les différences de potentiel suivantes :
- la différence de potentiel entre le coupon en acier inoxydable 316L par rapport à l'électrode de référence immergée dans le réservoir,
- la différence de potentiel entre le coupon en acier inoxydable 2507 par rapport à l'électrode de référence immergée dans le réservoir,
- la différence de potentiel entre le tube en acier inoxydable de la boucle par rapport à l'électrode de référence immergée dans le réservoir,
- la différence de potentiel mesurée par le capteur de biofilm qui comprend sa propre électrode de référence ECS.

La comparaison des différences de potentiel mesurées entre les coupons en acier inoxydable (situés dans la boucle) ou le tube en acier inoxydable de la boucle par rapport à l'électrode de référence immergée dans le réservoir d'une part, et la différence de potentiel mesurée par le capteur de biofilm (situé dans le réservoir) permet de comparer la formation de biofilm dans la boucle où l'eau de mer circulait à une vitesse de 0,8 m/s et dans le réservoir.

Dans le réservoir contenant de l'eau de mer (témoin), on a observé :
- une évolution de la différence de potentiel mesurée par le capteur de biofilm dans le réservoir de -0,7 à 0 V le 3^{ème} jour, puis une stabilisation de la différence de potentiel vers -0,25 V, et
- une évolution de la différence de potentiel mesurée entre le tube en acier inoxydable de la boucle par rapport à l'électrode de référence immergée dans le réservoir le 4^{ème} jour, la différence de potentiel évoluant de -0,25 V en début d'expérience jusqu'à +0,25V au bout de 17 jours.

La formation du biofilm indésirable est donc plus rapide dans le réservoir que dans la boucle, probablement pour des raisons hydrodynamiques (agitation homogène dans le réservoir et circulation à 0,8 m/s dans la boucle).

Dans les trois réservoirs comprenant l'EPS F2, F4 ou F5 dans de l'eau de mer, le protocole expérimental suivant a été suivi.

Chaque EPS a été introduit sous forme de poudre à une concentration de 0,01% massique aux fréquences suivantes :
- à t = 0 (début de l'expérience), introduction de l'EPS, puis agitation 12h sans circulation d'eau dans la boucle (pour permettre la réhydratation de l'EPS), puis ouverture de la boucle,
- à t = 3,5 jours, introduction de l'EPS, puis agitation 12h sans circulation d'eau dans la boucle, puis ouverture de la boucle,
- à t = 7 jours, introduction de l'EPS, puis agitation 12h sans circulation d'eau dans la boucle, puis ouverture de la boucle, puis
- à t = 10,5 jours, introduction de l'EPS, puis agitation 12h sans circulation d'eau dans la boucle, puis ouverture de la boucle.

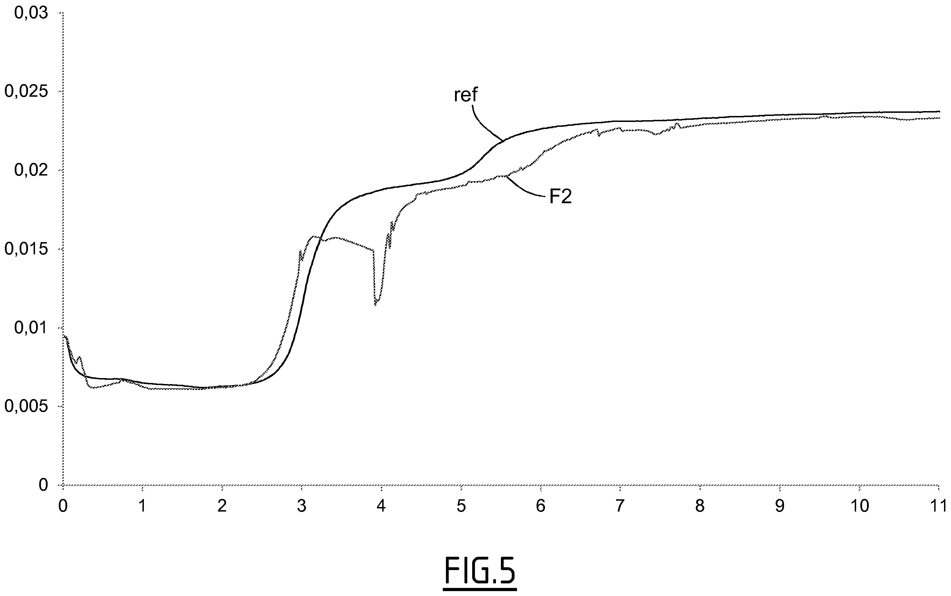

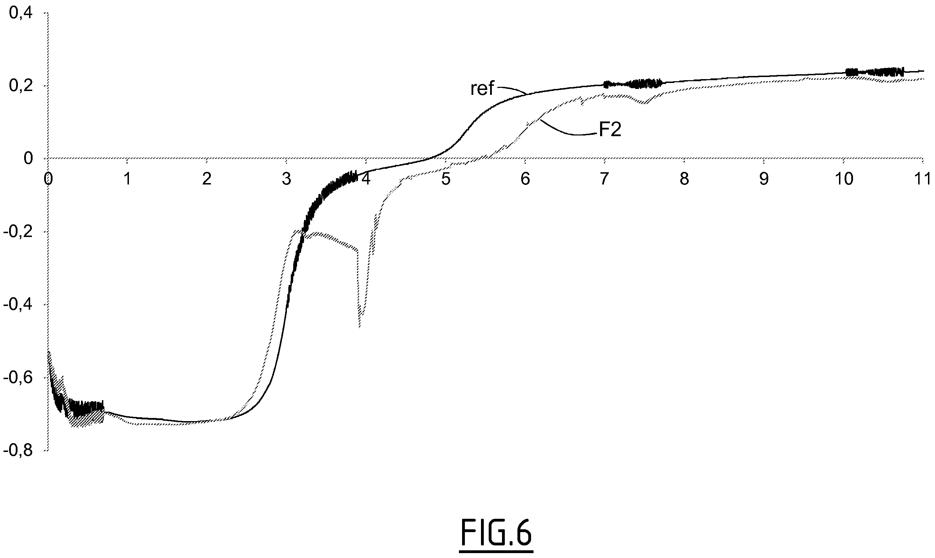

Les figures 5 et 6 représentent respectivement la densité de courant et le potentiel mesurés dans le capteur de biofilm situé dans le réservoir des bacs comprenant de l'eau de mer (témoin) (ref) ou l'EPS F2 dans l'eau de mer.

Les figures 5 et 6 montrent que l'injection de l'EPS F2 a permis de ralentir la formation du biofilm indésirable au 3^{ème} jour. Par contre, on observe qu'une fois que le biofilm indésirable s'est formé, l'introduction de l'EPS F2 n'a plus d'effet sur celui-ci. L'EPS F2 ne permet pas de détruire un biofilm déjà formé.

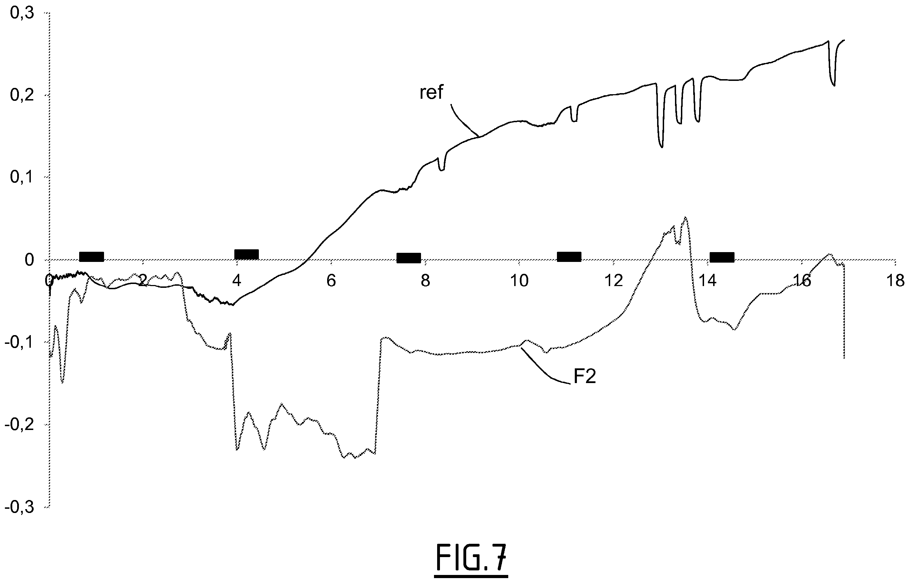

La figure 7 représente la différence de potentiel mesurée entre le tube en acier inoxydable 316L de la boucle par rapport à l'électrode de référence ECS immergée dans le réservoir pour les bacs comprenant de l'eau de mer (témoin) (ref) ou l'EPS F2 dans l'eau de mer.

La figure 7 montre que l'introduction de l'EPS F2 avant la montée de potentiel (et donc avant la formation du biofilm indésirable) a permis d'empêcher la formation de biofilm conduisant à l'ennoblissement (c'est-à-dire l'obtention d'un potentiel supérieur à 200 mV/ECS caractéristique de la formation d'un biofilm en eau de mer naturelle).

A la fin des expériences, les coupons ont été récupérés et analysés.

Le nombre de bactéries adhérant sur les coupons des bacs comprenant l'EPS F2 ou F4 est du même ordre de grandeur que le nombre de bactéries sur les coupons du bac témoin eau de mer. Les surfaces les moins colonisées sont celles traitées avec l'EPS F2, et les surfaces les plus colonisées sont celles traitées avec l'EPS F4. Pourtant, il y a plus de bactéries dans l'eau de mer des bacs comprenant F2 et F4 que dans l'eau de mer seule. Les EPS limitent la formation du biofilm des bactéries, mais comme ils ne sont pas biocides, ils ne limitent pas la multiplication des bactéries. Ainsi, sur les surfaces des coupons des expériences avec EPS F2 ou F4, il y n'y a pas significativement plus de bactéries que sur les surfaces des coupons au contact de l'eau de mer sans EPS.

La diversité microbienne est diminuée sur les coupons des bacs ayant été traités avec les EPS F2 ou F4 par rapport aux coupons du bac témoin eau de mer. On a observé une différence de population bactérienne sur les coupons des bacs ayant été traités avec les EPS F2 ou F4 par rapport aux coupons du bac témoin eau de mer.

### Exemple 2.2. : Système expérimental comprenant un réservoir et une boucle

Des expériences ont été réalisées dans un autre système expérimental de structure plus proche de la station de refroidissement d'un terminal méthanier.

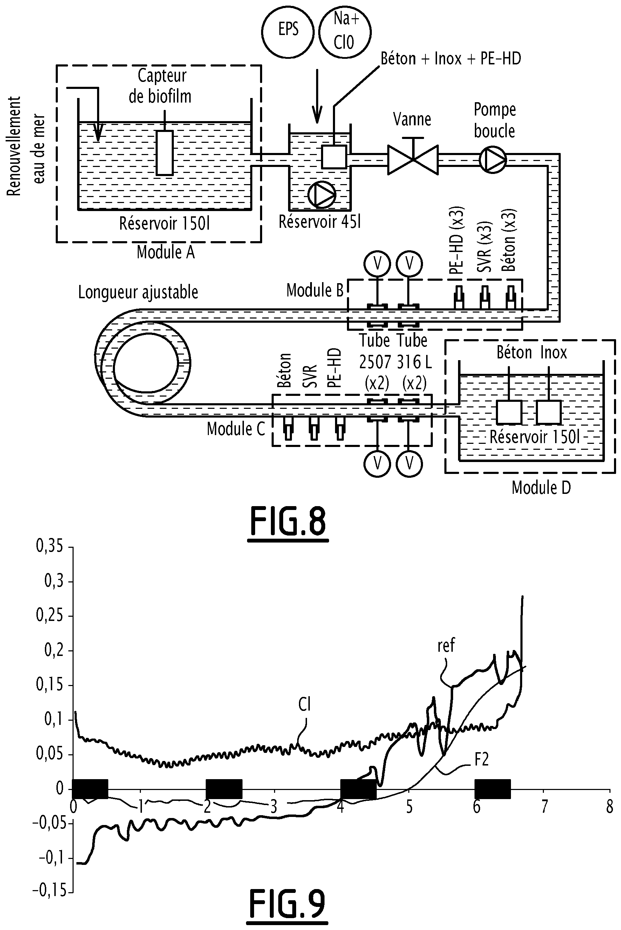

Ce système expérimental ; schématisé sur la figure 8, comprenait :
- un réservoir de 150 L (module A sur la figure 8) muni d'une pompe permettant l'agitation et dans lequel sont immergés une électrode de référence ECS et un capteur de biofilm, ce réservoir servant au renouvellement d'eau de mer,
- un réservoir de 45L, situé entre le réservoir de 150L et la boucle, et comprenant des échantillons d'acier inoxydable 316L, d'acier inoxydable 2507, de PEHD, de béton, et une électrode de référence ECS, ce réservoir étant celui dans lequel sont introduits les solutions d'EPS et d'hypochlorite de sodium,
- une boucle munie d'une pompe et d'une vanne, la boucle étant faite d'un tube de 40 mm de diamètre en PVC interrompu par :
   - un premier tube en acier inoxydable 316L (module B sur la figure 8), la surface du tube comprenant des coupons contenant chacun un matériau enrobé dans une résine époxy bi-composant (MécapreX IP) et poli. Les différents matériaux des coupons étaient : de l'acier inoxydable 316L, de l'acier inoxydable 2507, du PEHD (trois coupons), du béton (trois coupons) et du stratifié verre résine SVR (trois coupons),
   - un deuxième tube en acier inoxydable 316L (module C sur la figure 8), dont la surface était équipée comme celle du premier tube,
- un réservoir de 150L (module D sur la figure 8) situé à la fin de la boucle comprenant des échantillons d'acier inoxydable 316L, d'acier inoxydable 2507, et de béton et une électrode de référence ECS.
- le volume total des boucles expérimentales est de 150 litres.

Les réservoirs de 150L simulent la mer, celui de 45L la zone de la station dans laquelle est injectée l'EPS, la boucle simule les canalisations de la station de refroidissement. La longueur totale de la boucle est de 30 mètres. L'EPS est injecté dans le module B. Le module A n'est donc jamais en contact avec l'EPS. La formation de biofilm a été suivie dans les différents modules A, B, C et D. La vitesse de circulation dans la boucle était de 0,4 m/s.

Trois expériences ont été réalisées en parallèle et simultanément :
- une expérience dans laquelle 0,001% massique d'EPS F2 par rapport à la masse totale d'eau de mer du système expérimental (soit 150 kg) (l'EPS étant injecté sous forme de solution dans l'eau de mer) étaient injectés pendant 12 heures dans le réservoir de 45L (exemple selon l'invention), une injection étant réalisée tous les deux jours (soit une répétition de |12h d'injection de solution d'EPS, puis de 36h sans injection]),
- une expérience dans laquelle rien n'était injecté (circulation d'eau de mer) (témoin),
- une expérience dans laquelle une solution de 5 ppm d'hypochlorite de sodium dans l'eau de mer était injectée en continu dans le réservoir de 45L (comparatif)
chacune de ces expériences étant réalisée avec un système expérimental tel que défini ci-dessus.

La figure 9 montre que la formation du biofilm dans le bac de 45L est décalée d'une journée lorsque de l'EPS est injecté par rapport au témoin eau de mer. Comme attendu, le potentiel électrochimique reste constant lorsque de l'hypochlorite de sodium est injecté en continu.

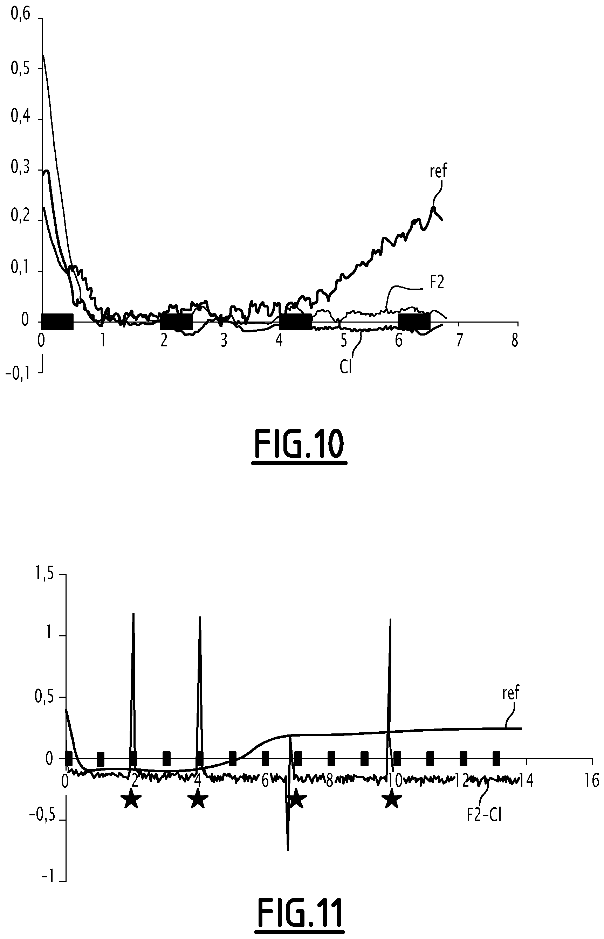

Dans le module C, on a constaté une évolution du potentiel électrochimique indiquant une formation de biofilm à partir de 4,5 jours pour le témoin eau de mer. Par contre, le potentiel électrochimique reste stable lorsque de l'EPS ou de l'hypochlorite de sodium a été injecté (Figure 10)

### Exemple 3 : Prévention du dépôt de biosalissures en eau de mer circulante par une combinaison EPS / choc chloré

Des expériences ont été réalisées en associant le traitement par une solution d'EPS avec un traitement à l'hypochlorite de sodium (choc chloré). L'objectif est notamment de diminuer les coûts en réduisant encore la concentration d'EPS, tout en ayant des quantités d'hypochlorite de sodium introduites minimes par rapport aux quantités usuellement utilisées pour empêcher la formation de biofilm dans une station de refroidissement d'un terminal méthanier.

Le système expérimental décrit à l'exemple 2.2. ci-dessus a été utilisé. La vitesse de circulation dans la boucle était de 30L/min.

Des concentrations de 50µg/L d'EPS F2 dans l'eau de mer étaient utilisées. Ces concentrations sont très faibles. A de telles concentrations, on suppose que l'EPS interviennent sur les récepteurs des microorganismes présents dans l'eau traitée (traitement de l'eau et des microorganismes qu'elles contient). Il semble peu probable qu'un film d'EPS puisse se former sur les surfaces à des concentrations si faibles.

Deux expériences ont été réalisées en parallèle et simultanément :
- une expérience (exemple selon l'invention) dans laquelle :
   - 50µg/L d'EPS F2 par rapport au volume d'eau de mer circulant dans le système expérimental (soit 30L/min) (sous forme de solution dans d'eau de mer) étaient injectés en 1 heure dans le réservoir de 45L, une injection étant réalisée tous les deux jours (soit une répétition de [1h d'injection de solution d'EPS, puis de 23h sans injection]),

   - une solution à 5 ppm en d'hypochlorite de sodium dans d'eau de mer était injectée en 1 heure dans le réservoir de 45L, une injection étant réalisée tous les deux jours ou trois jours (soit une répétition de [1h d'injection de solution d'hypochlorite de sodium, puis de 47h ou 71h sans injection]),
- une expérience dans laquelle de l'eau de mer était injectée en continu dans le réservoir de 45L (témoin).

A titre comparatif, la quantité d'hypochlorite de sodium utilisée dans cette expérience selon l'invention est très inférieure à la quantité usuellement introduite dans les eaux qui circulent dans les canalisations dans une station de refroidissement d'un terminal méthanier pour empêcher la formation de biofilm (habituellement 2 ppm d'hypochlorite de sodium injectés en continu).

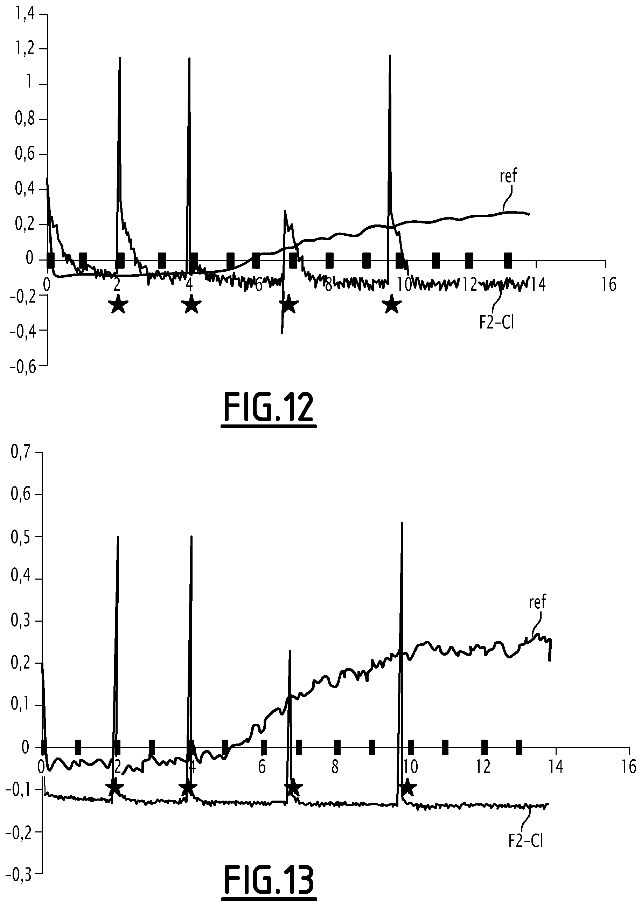

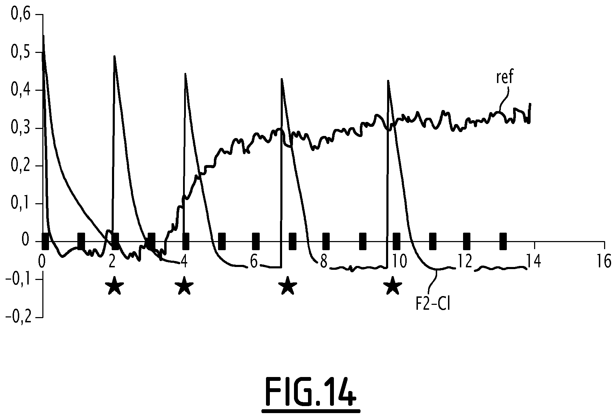

Les figures 11 à 14 montrent que les potentiels électrochimiques ne varient pas dans le réservoir de 45L et dans les modules B, C et D du système expérimental dans lequel l'association EPS/d'hypochlorite de sodium a été utilisée, ce qui démontre que le biofilm ne s'est pas formé. Par comparaison, le potentiel électrochimique dans le réservoir de 45L et dans les modules B, C et D du système expérimental témoin à l'eau de mer augmente au bout de 5 jours.

### Exemple 4 : Analyses écotoxicologiques de l'EPS F2

On a déterminé l'inhibition de la mobilité de *Daphnia magna* par l'EPS F2 selon les directives OCDE 202 du 23 novembre 2004, essai limite à 100mg/l, dans des conditions statiques. On a vérifié le respect des critères de validité comme indiqué dans le tableau 1. Le tableau 2 fournit les résultats.

**Tableau 1 : Vérification du respect des critères de validité.**

| | Valeurs selon OECD 202 | Critère de validité pour le test |
|---|---|---|
| Daphnies immobilisées dans le témoin | ≤ 10% | OK (0%) |
| Concentration en oxygène dissous | > 3 mg/l | OK (8,7 mg/l) |

**Tableau 2 : % de Daphnies immobilisées à 24h ou à 48h dans l'eau de dilution et dans un échantillon comprenant 100 mg/l d'EPS F2**

| Concentration nominale dans l'échantillon testé en mg/L | Nombre de Daphnies exposées au début | Daphnies immobilisées (%) | |
|---|---|---|---|
| | | à 24h | à 48h |
| eau de dilution (témoin) | 19 | 0 | 0 |
| 100 | 20 | 0 | 0 |

On en conclut que les concentrations permettant d'immobiliser 50% des Daphnies après 24h (EC₅₀-24h) et 48h (EC₅₀-48h) sont supérieures à la concentration testée, à savoir 100 mg/l.

Par ailleurs, on a déterminé les effets de l'EPS F2 sur la croissance de l'algue verte unicellulaire *Pseudokirchneriella subcapitata* selon la directive OCDE 201 de mars 2006, révisée le 28 juillet 2011, essai limite à 100mg/l.

On a vérifié le respect des critères de validité comme indiqué dans le tableau 3.

**Tableau 3 : Vérification du respect des critères de validité.**

| | Valeurs selon OECD 201 | Critère de validité pour le test |
|---|---|---|
| augmentation de la biomasse pendant 72h | facteur d'au moins 16 | OK (396,3) |
| taux de croissance spécifique quotidien (section par section) | < 35% | OK (24,6%) |
| taux de croissance spécifique moyen en 72h | < 7% | OK (0,4%) |

Les toxicités estimées sont :
pour le taux de croissance spécifique moyen : ErC50 (0-72h) > 100 mg
pour le rendement : EyC50 (0-72h) > 100 mg.

Par ailleurs, on a déterminé les effets de l'EPS F2 sur le poisson *Danio rerio* selon la directive OCDE 203 du 17 juillet 1992, essai limite à 100 mg/l, dans des conditions statiques. La concentration en EPS F2 qui tue 50% des poissons après 24, 48, 72 et 96h a été évaluée pour une concentration testée de 100 mg/l. Ces concentrations sont définies comme des concentrations létales LC₅₀-24h, LC₅₀-48h, LC₅₀-72h et LC₅₀-96h.

On a vérifié le respect des critères de validité comme indiqué dans le tableau 4.

**Tableau 4 : Vérification du respect des critères de validité.**

| | Valeurs selon OECD 203 | Critère de validité pour le test |
|---|---|---|
| mortalité du témoin | ≤ 1 poisson | OK (0%) |
| conditions constantes | conditions constantes | OK |
| concentration en oxygène dissous | > 60% | OK (87%) |

Les tableaux 5 et 6 fournissent les résultats du test.

**Tableau 5 : Mortalité des poissons dans le témoin et dans un échantillon comprenant 100**

| Concentration nominale dans l'échantillon testé en mg/l | Nombre de poissons exposés | Mortalité des poissons à 96h |
|---|---|---|
| témoin | 7 | 0 (0%) |
| 100,0 | 7 | 0 (0%) |

**Tableau 6 : concentrations létales LC₅₀-24h, LC₅₀-48h, LC₅₀-72h et LC₅₀-96h**

| Durée d'observation | 24h | 48h | 72h | 96h |
|---|---|---|---|---|
| LC₅₀ (mg/l) | > 100,0 | > 100,0 | > 100,0 | > 100,0 |

On en conclut que la concentration létale à 96h est supérieure à la concentration testée de 100,0 mg/l.

## Revendications

1. Procédé de prévention du dépôt de biosalissures sur une surface d'un matériau en contact avec un milieu aqueux ou avec de l'air dont l'humidité relative est supérieure ou égale à 90%, comprenant le traitement de la surface avec un exopolysaccharide :
- ayant une masse moléculaire au pic mesurée par chromatographie liquide d'exclusion stérique supérieure à 1 000 000 Da,
- comprenant moins de 5% massique, de préférence moins de 1% massique, de sulfate par rapport à la masse sèche de l'exopolysaccharide, et
- obtenu par fermentation d'une bactérie du genre Vibrio parahaemolyticus.

2. Procédé selon la revendication 1, dans lequel la bactérie du genre *Vibrio parahaemolyticus* est issue d'un milieu marin non atypique, où un milieu marin non atypique est un milieu dont :
- la température est comprise de 5 à 40°C, et/ou
- la pression est comprise de 0,1 à 5 bars, et/ou
- le pH est compris de 3 à 10, et/ou
- la salinité est comprise de 10 à 75 g/l, et/ou
- la pression partielle en oxygène dissous est supérieure ou égale à 10%.

3. Procédé selon l'une quelconque des revendications 1 à 2, dans lequel l'exopolysaccharide comprend des unités N-acétyl glucosamine, et de préférence comprend :
- soit des unités N-acétyl glucosamine, galactose et glucose,
- soit des unités N-acétyl glucosamine et acide galacturonique.

4. Procédé selon l'une quelconque des revendications 1 à 3, dans lequel l'exopolysaccharide est obtenu par fermentation d'une bactérie choisie parmi deux bactéries déposées auprès de la collection nationale de cultures de microorganismes :
- le 23 décembre 2015 sous le numéro d'ordre CNCM I-5036 avec la référence d'identification ENGIE 1-5 PB, ou
- le 23 décembre 2015 sous le numéro d'ordre CNCM I-5037 avec la référence d'identification ENGIE 1-12 PB.

5. Procédé selon l'une quelconque des revendications précédentes, dans lequel l'exopolysaccharide est sous forme de solution, de préférence aqueuse, à une concentration de 10⁻⁷% à 0,02% en poids par rapport au poids de la solution.

6. Procédé selon l'une quelconque des revendications précédentes, dans lequel le traitement de la surface avec l'exopolysaccharide est ponctuel ou répété.

7. Procédé selon l'une quelconque des revendications précédentes, comprenant l'élimination partielle ou totale des biosalissures présentes sur la surface du matériau, notamment par un agent biocide, par exemple par chloration.

8. Procédé selon la revendication 7, comprenant :
- le traitement répété de la surface avec l'exopolysaccharide avec une fréquence de traitement par l'exopolysaccharide de une fois par heure à une fois par semaine, de préférence une fois toutes les 12 heures à une fois tous les trois jours, par exemple une fois par jour, et
- le traitement répété de la surface avec un agent biocide avec une fréquence de traitement par l'agent biocide d'une fois par heure à une fois par semaine, de préférence une fois par jour à une fois tous les cinq jours, par exemple une fois tous les deux jours.

9. Procédé selon la revendication 8, dans lequel :
- l'exopolysaccharide est sous forme de solution, de préférence aqueuse, à une concentration de 1×10⁻⁶% à 1×10⁻³% en poids par rapport au poids de la solution, et/ou
- l'agent biocide est sous forme de solution, de préférence aqueuse, à une concentration de 1×10⁻⁵% à 5×10⁻³% en poids par rapport au poids de la solution.

10. Procédé selon l'une quelconque des revendications précédentes, comprenant le suivi du dépôt de biosalissures sur la surface du matériau.

11. Procédé selon la revendication 10, dans lequel la surface est électriquement conductrice et le suivi du dépôt de biosalissures est réalisé en suivant :
- l'évolution de la densité de courant de la surface électriquement conductrice dans le temps, et/ou
- l'évolution dans le temps du potentiel électrochimique de la surface électriquement conductrice par rapport à une électrode de référence.

12. Procédé selon l'une quelconque des revendications précédentes, dans lequel le matériau est le matériau d'une canalisation, d'un terminal méthanier ou d'une centrale thermique.

## Patentansprüche

1. Verfahren zur Verhinderung der Ablagerung von Biobewuchs auf einer Oberfläche eines Materials, das in Kontakt mit einem wässrigen Medium oder mit Luft mit einer relativen Feuchtigkeit von 90 % oder mehr ist, umfassend die Behandlung der Oberfläche mit einem Exopolysaccharid:
- das ein Peak-Molekulargewicht, gemessen durch sterische Ausschluss-Flüssigkeitschromatographie, von mehr als 1.000.000 Da aufweist.
- umfassend weniger als 5 Masseprozent, vorzugsweise weniger als 1 Masseprozent Sulfat, bezogen auf die Trockenmasse des Exopolysaccharids, und
- erlangt durch Fermentation eines Bakteriums der Gattung Parahaemolyticusaus.

2. Verfahren nach Anspruch 1, wobei das Bakterium der Gattung *Vibrio parahaemolyticus* aus einer nicht atypischen Meeresumgebung stammt, wobei eine nicht atypische Meeresumgebung eine Umgebung ist, bei der:
- die Temperatur zwischen 5 bis 40 °C ist, und/oder
- der Druck zwischen 0,1 und 5 bar ist, und/oder
- der pH zwischen 3 und 10 ist, und/oder
- die Salinität zwischen 10 und 75 g/l ist, und/oder
- der Partialdruck von gelöstem Sauerstoff höher als oder gleich wie 10 % ist.

3. Verfahren nach einem der Ansprüche 1 bis 2, wobei das Exopolysaccharid ferner N-Acetylglucosamin-Einheiten umfasst, und vorzugsweise Folgendes umfasst:
- N-Acetylglucosamin-, Galactose- und Glucose-Einheiten,
- N-Acetylglucosamin- und Galacturonsäure-Einheiten.

4. Verfahren nach einem der Ansprüche 1 bis 3, wobei das Exopolysaccharid durch Fermentation eines Bakteriums erlangt wird, das ausgewählt ist aus zwei Bakterien, die bei der nationalen Sammlung von Kulturen von Mikroorganismen hinterlegt sind:
- am 23. Dezember 2015 unter der Auftragsnummer CNCM I-5036 mit der Kennnummer ENGIE 1-5 PB, oder
- am 23. Dezember 2015 unter der Auftragsnummer CNCM I-5037 mit der Kennnummer ENGIE 1-12 PB.

5. Verfahren nach einem der vorherigen Ansprüche, wobei das Exopolysaccharid in Form einer Lösung, vorzugsweise wässrig, mit einer Konzentration von 10⁻⁷ Gewichtsprozent bis 0,02 Gewichtsprozent, bezogen auf das Gewicht der Lösung, ist.

6. Verfahren nach einem der vorherigen Ansprüche, wobei die Behandlung der Oberfläche mit dem Exopolysaccharid einmalig oder wiederholt erfolgt.

7. Verfahren nach einem der vorherigen Ansprüche, umfassend die teilweise oder vollständige Entfernung von Biobewuchs auf der Oberfläche des Materials, insbesondere durch ein biozides Mittel, z. B. durch Chlorierung.

8. Verfahren nach Anspruch 7, umfassend:
- die wiederholte Behandlung der Oberfläche mit dem Exopolysaccharid mit einer Behandlungshäufigkeit mit dem Exopolysaccharid von einmal pro Stunde bis einmal pro Woche, vorzugsweise einmal alle 12 Stunden bis einmal alle drei Tage, beispielsweise einmal täglich, und
- die wiederholte Behandlung der Oberfläche mit einem bioziden Mittel mit einer Behandlungshäufigkeit mit dem bioziden Mittel von einmal pro Stunde bis einmal pro Woche, vorzugsweise einmal pro Tag bis einmal alle fünf Tage, beispielsweise einmal alle zwei Tage.

9. Verfahren nach Anspruch 8, wobei:
- das Exopolysaccharid in Form einer Lösung, vorzugsweise wässrig, mit einer Konzentration von 1 × 10⁻⁶ Gewichtsprozent bis 1 × 10⁻³ Gewichtsprozent, bezogen auf das Gewicht der Lösung, ist, und/oder
- das biozide Mittel in Form einer Lösung, vorzugsweise wässrig, mit einer Konzentration von 1 × 10⁻⁵ Gewichtsprozent bis 5× 10⁻³ Gewichtsprozent, bezogen auf das Gewicht der Lösung, ist.

10. Verfahren nach einem der vorherigen Ansprüche, umfassend die Verfolgung der Ablagerung von Biobewuchs auf der Oberfläche des Materials.

11. Verfahren nach Anspruch 10, wobei die Oberfläche elektrisch leitfähig ist und die Verfolgung der Ablagerung von Biobewuchs durch Verfolgen von Folgendem durchgeführt wird:
- der Entwicklung der Stromdichte der elektrisch leitenden Oberfläche im Lauf der Zeit, und/oder
- der zeitlichen Entwicklung des elektrochemischen Potenzials der elektrisch leitenden Oberfläche bezogen auf eine Referenzelektrode.

12. Verfahren nach einem der vorherigen Ansprüche, wobei das Material das Material einer Rohrleitung, eines LNG-Terminals oder eines Wärmekraftwerks ist.

## Claims

1. A process for preventing the formation of biofouling on a surface of a material in contact with an aqueous medium or with air having a relative humidity of 90% or more, comprising treating the surface with an exopolysaccharide:
- having a peak molecular weight as measured by liquid chromatography of steric exclusion greater than 1,000,000 Da,
- comprising less than 5% by weight, preferably less than 1% by weight, of sulphate based on the dry weight of the exopolysaccharide, and
- obtained by fermentation of a bacterium of the genus Vibrio parahaemolyticus.

2. A process according to claim 1, wherein the bacterium of the genus *Vibrio parahaemolyticus* is derived from a non-typical marine environment, wherein a non-typical marine environment is one in which:
- the temperature is between 5 and 40 °C, and/or
- the pressure is between 0.1 and 5 bar, and/or
- the pH is between 3 and 10, and/or
- the salinity is between 10 and 75 g/L, and/or
- the partial pressure of dissolved oxygen is greater than or equal to 10%.

3. The process according to any one of claims 1 to 2, wherein the exopolysaccharide comprises N-acetyl glucosamine units, and preferably comprises:
- either N-acetyl glucosamine, galactose and glucose units,
- or N-acetyl glucosamine and galacturonic acid units.

4. The process according to any one of claims 1 to 3, wherein the exopolysaccharide is obtained by fermentation of a bacterium selected from two bacteria deposited with the Collection Nationale de Cultures de Microorganismes:
- on 23^{rd} December 2015 under order number CNCM I-5036 with the identification reference ENGIE 1-5 PB, or
- on 23^{rd} December 2015 under order number CNCM I-5037 with the identification reference ENGIE 1-12 PB.

5. The process according to any one of the preceding claims, wherein the exopolysaccharide is in the form of a solution, preferably aqueous, at a concentration of from 10⁻⁷% to 0.02% by weight based on the weight of the solution.

6. The process according to any one of the preceding claims, wherein the treatment of the surface with the exopolysaccharide is spot or repeated.

7. The process according to any of the preceding claims, comprising the partial or total removal of biofouling present on the surface of the material, in particular by a biocidal agent, for example by chlorination.

8. The method according to claim 7, comprising:
- repeated treatment of the surface with the exopolysaccharide at a frequency of treatment with the exopolysaccharide of once per hour to once per week, preferably once every 12 hours to once every three days, e.g. once per day, and
- repeated treatment of the surface with a biocidal agent with a frequency of treatment with the biocidal agent of once an hour to once a week, preferably once a day to once every five days, for example once every two days.

9. The process according to claim 8, wherein:
- the exopolysaccharide is in the form of a solution, preferably aqueous, at a concentration of 1×10⁻⁶% to 1×10⁻³% by weight based on the weight of the solution, and/or
- the biocidal agent is in the form of a solution, preferably aqueous, at a concentration of 1×10⁻⁵% to 5×10⁻³% by weight based on the weight of the solution.

10. The process according to any one of the preceding claims, comprising monitoring the formation of biofouling on the surface of the material.

11. The process according to claim 10, wherein the surface is electrically conductive and the monitoring of the formation of biofouling is carried out by monitoring:
- the change of the current density of the electrically conductive surface over time, and/or
- the change over time of the electrochemical potential of the electrically conductive surface with respect to a reference electrode.

12. The process according to any of the preceding claims, wherein the material is the material of a pipeline, an LNG terminal or a thermal power plant.
